# EUROPÄISCHE PATENTSCHRIFT

(11) **EP 2 382 053 B1**
(45) Veröffentlichungstag und Bekanntmachung des Hinweises auf die Patenterteilung: **02.09.2015**
(21) Anmeldenummer: 10702025.7
(22) Anmeldetag: 16.01.2010
(51) Int. Cl.: B05B 15/12, B01D 46/00, B03C 3/08, B03C 3/68, B03C 3/78, B03C 3/41, B03C 3/47, B03C 3/86

(54) **ANLAGE ZUM BESCHICHTEN, INSBESONDERE LACKIEREN, VON GEGENSTÄNDEN, INSBESONDERE VON FAHRZEUGKAROSSERIEN**
SYSTEM FOR COATING, IN PARTICULAR VARNISHING, OBJECTS, IN PARTICULAR VEHICLE BODIES
INSTALLATION DE REVÊTEMENT, NOTAMMENT DE PEINTURE, D'OBJETS, NOTAMMENT DE CARROSSERIES DE VÉHICULE

(30) Priorität: 28.01.2009 DE 102009006528
(43) Veröffentlichungstag der Anmeldung: 02.11.2011
(73) Patentinhaber: EISENMANN Anlagenbau GmbH & Co. KG, 71032 Böblingen (DE)
(72) Erfinder: HIHN, Erwin, 72141 Walddorfhäslach (DE)
(74) Vertreter: Ostertag, Ulrich
(86) Internationale Anmeldenummer: PCT/EP2010/000219
(87) Internationale Veröffentlichungsnummer: WO 2010/086093

(56) Entgegenhaltungen:
- EP-A1- 0 047 432
- EP-A1- 0 461 695
- EP-A2- 0 161 205
- WO-A1-90/12649
- FR-A1- 2 911 633
- US-A- 2 486 877

## Beschreibung

Die Erfindung betrifft eine Anlage zum Beschichten von Gegenständen nach dem Oberbegriff des Patentanspruchs 1.

Bei der manuellen oder automatischen Applikation von Lacken auf Gegenständen gelangt ein Teilstrom des Lacks, der im Allgemeinen sowohl Festkörper als auch Lösemittel und/oder Bindemittel enthält, nicht auf den Gegenstand. Dieser Teilstrom wird in der Fachwelt "Overspray" genannt. Der Overspray wird von dem Luftstrom in der Beschichtungskabine erfasst und einer Abscheidung zugeführt, sodass die Luft ggfs. nach einer geeigneten Konditionierung wieder in die Beschichtungskabine zurückgeleitet werden kann.

Insbesondere bei Anlagen mit größerem Lackverbrauch, beispielsweise bei Anlagen zum Lackieren von Fahrzeugkarosserien, kommen bevorzugt Nassabscheidesysteme zum Einsatz. Bei vom Markt her bekannten Nassabscheidern fließt Wasser gemeinsam mit der von oben kommenden Kabinenluft zu einer die Luftströmung beschleunigenden Düse. In dieser Düse findet eine Verwirbelung der durchströmenden Kabinenabluft mit dem Wasser statt. Bei diesem Vorgang treten die Overspray-Partikel weitgehend in das Wasser über, so dass die Luft den Nassabscheider im Wesentlichen gereinigt verlässt und sich die Lackoverspray-Partikel in dem Wasser befinden. Aus diesem können sie dann wiedergewonnen oder entsorgt werden. Bei bekannten Nassabscheidern wird verhältnismäßig viel Energie zur Umwälzung der erforderlichen recht großen Wassermenge und zur Überwindung der Druckdifferenz zwischen Kabine, Düse und Entsorgungsraum benötigt. Die Aufbereitung des Spülwassers ist durch den hohen Einsatz an lackbindenden und entklebenden Chemikalien und durch die Lackschlammentsorgung kostenintensiv. Weiterhin nimmt die Luft durch den intensiven Kontakt mit dem Spülwasser sehr viel Feuchtigkeit auf, was im Umluftbetrieb wiederum einen hohen Energieverbrauch für die Luftaufbereitung zur Folge hat bzw. bei hohem Feuchte- oder Lösungsmittelgehalt das Verwerfen der Abluft erfordert.

Beispielsweise aus der EP 0 047 432 A1 ist eine Anlage bekannt, welche den Overspray in einem ersten Schritt mittels eines üblichen Nassabscheideverfahrens teilweise entfernt. Die so vorgereinigte Kabinenluft wird anschließend einem Nass-Elektroabscheider zugeführt, wo eine Reinigung der Abluft von darin enthaltenen Overspray-Teilchen erfolgt. Bei dieser Anlage wird außer dem Waschwasser noch eine Entfeuchtungsflüssigkeit benötigt; beide bedürfen der Reinigung, ehe sie wieder verwendet oder entsorgt werden können.

Bei vom Markt her bekannten Vorrichtungen der eingangs genannten Art wird demgegenüber auf trockenem Weg abgeschieden, indem von der vorbeiströmenden Kabinenluft mitgeführte Overspray-Partikel durch die Gegenelektrodeneinrichtung der elektrostatisch arbeitenden Abscheidevorrichtung ionisiert werden und aufgrund des zwischen der Abscheideelektrode und der Gegenelektrodeneinrichtung aufgebauten elektrischen Felds zur Abscheidefläche der Abscheideelektrode wandern, an welcher sie sich abscheiden. Die an der Abscheidefläche haftenden Overspray-Partikel können dann beispielsweise mechanisch von dieser abgestreift und abtransportiert werden.

Diese bekannten Anlagen arbeiten mit Abscheidevorrichtungen, bei denen die Einlassöffnung für die mit Overspray-Partikeln beladenen Luft oben und die Auslassöffnung für die gereinigte Luft unten ist. Dies hat zur Folge, dass die Abscheideelektrode und die Gegenelektrodeneinrichtung sorgfältig gegen Verunreinigungen, insbesondere herabfallenden Schmutz und sonstige Gegenstände, geschützt werden müssen. Die Abscheidung erfolgt hauptsächlich im oberen Bereich der Abscheideflächen, wo im Allgemeinen der Abtransport des abgeschiedenen Materials problematisch ist.

Aufgabe der vorliegenden Erfindung ist es, eine Anlage der eingangs genannten Art derart auszubilden, dass der Betrieb der elektrostatischen Abscheidevorrichtung problemfreier ist.

Diese Aufgabe wird erfindungsgemäß durch eine Anlage mit den im Patentanspruch 1 angegebenen Merkmalen gelöst.

Durch die Umkehrung der Luftströmung durch die elektrostatische Abscheidevorrichtung gegenüber dem Stand der Technik wird erreicht, dass die empfindlicheren inneren Komponenten der Abscheidevorrichtung sich an einer geschützteren Stelle befinden und die Gefahr von deren Verschmutzung oder Beschädigung verringert ist. Außerdem wird.der größere Teil der Overspray-Partikel im unteren Bereich der Abscheideflächen abgeschieden, wo er verhältnismäßig leicht abgenommen und entfernt werden kann.

Dabei führt der Luftweg vom Boden der Beschichtungskabine zunächst zu mindestens zwei Luftleitblechen und ist dort von diesen begrenzt, die sich in Strömungsrichtung der Luft trichterartig verjüngen und von einer mehr oder weniger zusammenhängenden Schicht einer Abscheideflüssigkeit überströmbar sind. In dieser Abscheideflüssigkeit wird schon ein Großteil der Overspray-Partikel aufgenommen, wodurch die nachgeschaltete elektrostatisch arbeitende Abscheidevorrichtung entlastet wird.

Der Luftweg führt dann von den Leitblechen weiter zur Einlassöffnung der elektrostatischen Abscheidevorrichtung. Dadurch wird die Anlage insgesamt kompakter; weitere zwischengeschaltete Vorrichtungen, wie sie insbesondere bei Anlagen mit Nassabscheidung vorkommen, sind entbehrlich.

Wie beim Stand der Technik umfasst auch die erfindungsgemäße Gegenelektrodeneinrichtung einen hauptsächlich der Ionisation dienenden Korohabereich und einen hauptsächlich der Abscheidung dienenden Feldbereich. Anders als beim Stand der Technik ist jedoch bei der vorliegenden Erfindung der Koronabereich unterhalb des Feldbereichs angeordnet.

Mehrere Abscheideelektroden und zugeordnete Gegenelektrodeneinrichtungen sind vorzugsweise in der Abscheidevorrichtung nebeneinander angeordnet, wobei mindestens ein Teil der Abscheideelektroden jeweils mit mindestens einer Gegenelektrodeneinrichtung zu einer Abscheideeinheit zusammengefasst ist, die insgesamt der Abscheidevorrichtung entnommen werden kann. Auf diese Weise kann also jede Abscheideelektrode, ggf. mit einer oder zwei zugeordneten Gegenelektrodeneinrichtungen, zu Wartungszwecken aus der Abscheidevorrichtung entnommen werden.

Zumindest eine Abscheideelektrode kann auch ohne zugehörige Gegenelektrodeneinrichtung als Abscheideinheit ausgebildet sein, die insgesamt der Abscheidevorrichtung entnommen werden kann. Auf diese Weise können nebeneinander in der Abscheidevorrichtung solche Abscheideeinheiten vorhanden sein, die sowohl eine Abscheideelektrode als auch mindestens eine Gegenelektrodeneinrichtung umfassen, als auch Abscheideeinheiten, die nur die Abscheideelektrode enthalten, die dann aber mit einer Gegenelektrodeneinrichtung der benachbarten Abscheideeinheit zusammenwirkt.

Es ist zweckmäßig, wenn die Abscheideeinheiten auf Schienen in einen Wartungsraum verfahrbar sind, in dem sie dann einer Wartungsperson zugänglich sind.

Besonders empfehlenswert ist, wenn jeder Abscheideelektrode eine Zuführeinrichtung zugeordnet ist, mit deren Hilfe dem oberen Bereich jeder Abscheidefläche der Abscheideelektrode Abscheideflüssigkeit zuführbar ist, derart, dass die Abscheideflüssigkeit auf jeder Abscheidefläche der Abscheideelektrode flächig herabläuft.

Die Zuführeinrichtung weist zweckmäßigerweise auf:
a) eine Rinne, die oberhalb der Abscheideelektrode angeordnet und bis zu einem bestimmten Spiegel mit Abscheideflüssigkeit befüllbar ist;
b) mindestens eine angetriebene Walze, die mit einem Bereich ihrer Mantelfläche in die Abscheideflüssigkeit eintaucht und bei ihrer Verdrehung Abscheideflüssigkeit mitnimmt;
c) eine Leiteinrichtung, welche die Abscheideflüssigkeit von der Mantelfläche der Walze zu der oder den Abscheideflächen der Abscheideelektrode führt.

Diese Art der Zuführeinrichtung sorgt für eine besonders gleichmäßige und zuverlässige Beaufschlagung der Abscheideflächen der Abscheideelektrode mit Abscheideflüssigkeit.

Die Leiteinrichtung kann dabei mindestens ein Schälblech umfassen, das mit einem oberen Rand federn gegen die Mantelfläche der Walze und mit einem unteren Rand federn gegen die Abscheidefläche der Abscheideelektrode anliegt. Dieses Schälblech schält dann von der Mantelfläche der Walze die Abscheideflüssigkeit bei der Walzenverdrehung ab und führt diese Abscheideflüssigkeit zur Abscheidefläche der zugeordneten Abscheideelektrode.

Die Schälbleche sind vorzugsweise an der Rinne lösbar befestigt, sodass sie leicht entfernbar und wartbar sind.

Alle Walzen aller Zuführeinrichtungen können durch eine gemeinsame Antriebseinrichtung antreibbar sein.

Vorzugsweise ist die Anlage zum Lackieren von Gegenständen, insbesondere Fahrzeugkarosserien, ausgebildet.

Ein Ausführungsbeispiel der Erfindung wird nachfolgend anhand der Zeichnung näher erläutert; es zeigen
- Figur 1: einen vertikalen Teilschnitt durch eine Lackieranlage zum Lackieren von Fahrzeugkarosserien;
- Figur 2: perspektivisch eine elektrostatische Abscheidevorrichtung für Lack-Overspray, die in der Lackieranlage von Figur 1 verwendet wird;
- Figur 3: perspektivisch eine erste Art einer Abscheideeinheit aus der Abscheidevorrichtung der Figur 2;
- Figur 4: in vergrößertem Maßstab die Stirnansicht der Abscheideeinheit von Figur 3;
- Figur 5: im Maßstab der Figur 4 die Stirnansicht einer Zuführeinrichtung für eine Abscheideflüssigkeit und einer zugeordneten Abscheideelektrode;
- Figur 6: perspektivisch eine zweite Art einer Abscheideeinheit aus der Abscheidevorrichtung der Figur 2.

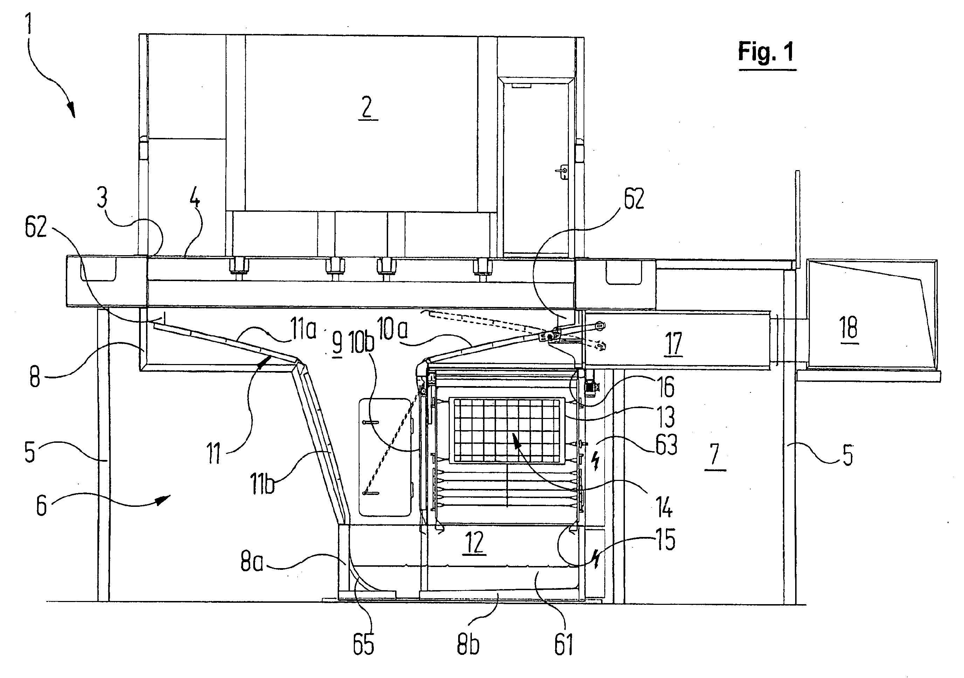

Zunächst wird auf Figur 1 Bezug genommen, in welcher eine Lackieranlage zum Lackieren von Fahrzeugkarosserien dargestellt ist. Sie trägt insgesamt das Bezugszeichen 1. In der oberen Hälfte ist teilweise eine Lackierkabine 2 gezeigt, die in bekannter Weise ausgestaltet ist und daher nachfolgend nicht näher erläutert zu werden braucht. Die zu lackierenden Fahrzeugkarosserien werden senkrecht zur Zeichenebene der Figur 1 mit Hilfe eines nicht dargestellten Transportsystems kontinuierlich oder intermittierend gefördert und dabei aus Applikationseinrichtungen, die ebenfalls nicht gezeigt sind, mit Lack beaufschlagt.

Nicht eigens dargestellt ist außerdem ein Luftplenum, welches sich oberhalb der Lackierkabine 2 befindet. Konditionierte Luft wird in gleichmäßigem Strom aus diesem Luftplenum über eine Filterdecke in den Innenraum der Lackierkabine 2 eingebracht. Dort fließt sie nach unten, nimmt den nicht an den Fahrzeugkarosserien haftenden Lack-Overspray auf und verlässt die Lackierkabine 2 durch eine großflächige, durch einen begehbaren Gitterrost 4 abgedeckte untere Öffnung 3.

Die gesamt Lackierkabine 2 ruht auf einem Stahlbau 5, wie dies an und für sich bekannt ist.

Unterhalb der Lackierkabine 2 befindet sich ein Anlagenbereich 6, in welchem die die Lackierkabine 2 über die Öffnung 3 verlassende, Overspray-Partikel beladene Luft wieder gereinigt wird. Der Anlagenbereich 6 umfasst einen Abscheideraum 9, der bis auf die obere Öffnung 3 und weitere, der Durchführung der Luft dienende Öffnungen allseits durch Wände 8 abgeschlossen ist. Innerhalb des Abscheideraums 9 befinden sich zwei Leitbleche 10 und 11. Das in Figur 1 linke Leitblech 11 besitzt einen äußeren, verhältnismäßig wenig von außen nach innen geneigten Abschnitt 11a und einen sich an diesen anschließenden, stärker geneigten Abschnitt 11b. In ähnlicher Weise besitzt das Leitblech 10, welches in Figur 1 rechts gezeichnet ist, einen äußeren, verhältnismäßig wenig von außen nach innen geneigten Abschnitt 10a sowie einen sich an diesen anschließenden, im dargestellten Ausführungsbeispiel senkrecht nach unten führenden Abschnitt 10b. Der Abschnitt 10a lässt sich aus der durchgezogen dargestellten Arbeitsposition in eine gestrichelt dargestellte Wartungsposition verschwenken. In ähnlicher Weise lässt sich der Abschnitt 10b aus der vertikalen Arbeitsposition in eine Wartungsposition verschwenken.

Aus seitlich angebrachten Verteilerrinnen 62 kann eine Abscheideflüssigkeit auf die Leitbleche 10 und 11 und in einer mehr oder weniger zusammenhängende Schicht an deren oberer Fläche nach unten fließen.

Unterhalb des von den beiden Leitblechen 10 und 11 auf gegenüberliegenden Seiten begrenzten Raums befindet sich ein Übergangsraum 12. Ein Leitblech 65, welches sich gekrümmt zwischen der Wand 8a und dem Boden 8b des Übergangsraumes 12 erstreckt, sorgt für einen strömungsgünstigen Übergang der Luft in den Übergangsraum 12.

Oberhalb des in Figur 1 rechten Bereichs des Übergangsraums 12, rechts von dem vertikal verlaufenden Abschnitt 10b des Leitblechs 10 ist ein Aufnahmeraum 13 für eine insgesamt mit dem Bezugszeichen 14 versehene elektrostatisch arbeitende Abscheidevorrichtung vorgesehen. Der Aufnahmeraum 13 steht über eine untere Öffnung 15 mit dem Übergangsraum 12 und über eine obere Öffnung 16 mit dem Raum unterhalb des Abschnitts 10a des Leitblechs 10 und von dort über einen horizontal ausgerichteten Luftkanal 17 mit einem Luft-Sammelkanal 18 in Verbindung. Letzterer führt zu einer nicht dargestellten Luft-Konditioniereinrichtung, mit welcher die gereinigte Luft wieder auf die richtige Temperatur und Luftfeuchtigkeit gebracht wird, so dass sie erneut dem Luftplenum oberhalb der Lackierkabine 2 zugeleitet werden kann. In bekannter Weise wird das Volumen der rezirkulierten Luft in Abhängigkeit von nicht entfernbaren Substanzen gewählt.

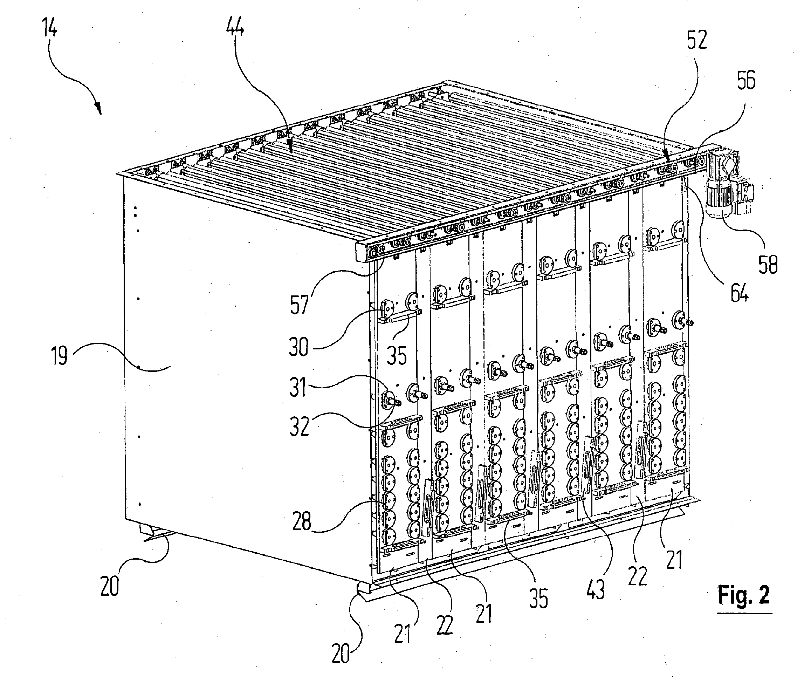

Zur Beschreibung der Abscheidevorrichtung 14 wird nunmehr auf die Figuren 2 bis 5 Bezug genommen. Wie der perspektivischen Ansicht der Abscheidevorrichtung 14 von Figur 2 entnommen werden kann, umfasst diese ein Gehäuse 19, welches im Wesentlichen nach unten, vorne und oben offen ist und an der Unterseite zwei gegenüberliegende, parallele und gewinkelte Luftleitbleche 20 besitzt. Diese stellen, wie sich auch der Figur 1 entnehmen lässt, die Verbindung zwischen dem Innenraum des Gehäuses 19 und dem Übergangsraum 12 sicher.

Innerhalb des Gehäuses 19 befindet sich nebeneinander eine Vielzahl von als Einschüben gestalteten Abscheideeinheiten 21 bzw. 22, die unterschiedlich breit sind.

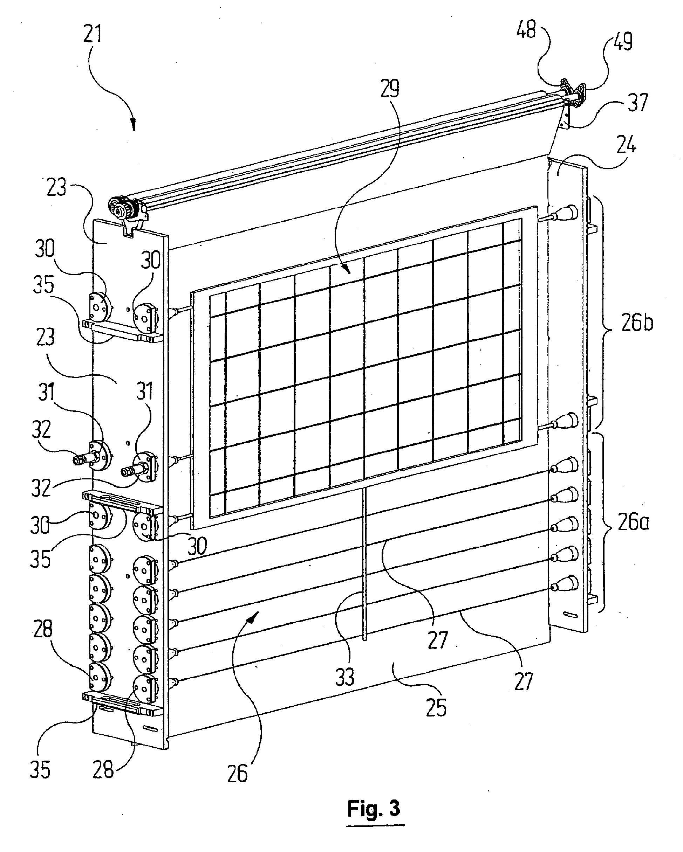

Der Aufbau der breiteren Abscheideeinheiten 21 ist den Figuren 3 bis 5 zu entnehmen. Wie Figur 3 zeigt, umfasst jede Abscheideeinheit 21 eine vordere Stirnplatte 23 und eine hintere Stirnplatte 24. Zwischen den beiden Stirnplatten 23 und 24, mittig mit diesen verbunden, erstreckt sich eine plattenförmige Abscheideelektrode 25, die in Betriebszustand vertikal ausgerichtet ist. Beidseits der Abscheideelektrode 25 ist jeweils eine Gegenelektrodeneinrichtung 26 vorgesehen. In Figur 3 ist nur eine dieser Gegenelektrodeneinrichtungen 26 dargestellt; die zweite, identisch ausgebildete ist hinter der Abscheideelektrode 25 angeordnet und in Figur 3 von dieser verdeckt.

Die Gegenelektrodeneinrichtung 26 weist einen unteren Koronabereich 26a auf, in dem im dargestellten Ausführungsbeispiel fünf Koronadrähte 27 vorgesehen sind, die parallel zueinander und in Abstand zu der Abscheideelektrode 25 von der Stirnplatte 23 zur Stirnplatte 24 verlaufen und dort mittels geeigneter Halterungen 28 befestigt sind. Die Halterungen 28 der in Figur 3 verdeckten, hinteren Gegenelektrodeneinrichtung 26 sind in Figur 3 sichtbar. Alle Halterungen 28 sind isolierend ausgeführt, so dass die potentialmäßige Trennung zwischen den Koronadrähten 27 und den Stirnplatten 23 und 24 gewährleistet ist.

Oberhalb des Koronabereichs 26a befindet sich ein Feldbereich 26b der Gegenelektrodeneinrichtung 26. Körperlich ist dieser Feldbereich 26b durch eine gitterartige Feldelektrode 29 verwirklicht, die parallel zur Abscheideelektrode 25, in Abstand zu dieser, montiert ist. Die entsprechenden Halterungen 30 dienen der Befestigung der Feldelektrode 29 an den beiden Stirnplatten 23, 24.

Die Halterungen 30 der Stirnplatten 23, 24 sind wieder als reine Isolatoren ausgebildet. Isolatoren 31 an der vorderen Stirnplatte 23 enthalten zusätzlich Hochspannungsanschlüsse 32, die gegenüber der Stirnplatte 23 elektrisch isoliert mit der Feldelektrode 29 verbunden sind. Ein elektrisch leitender Stab 33 schließlich verbindet die Feldelektrode 29 mit allen Koronadrähten 27, die zu diesem Zweck in einen Schlitz des Stabs 33 eingeführt sein können.

Wie bereits oben erwähnt, ist die Abscheideeinheit 21 als Einschub ausgebildet; dies heißt, dass sie als Einheit aus dem Gehäuse 19 herausgezogen werden kann. Dies geschieht mit Hilfe von Griffen 35, die an der vorderen Stirnplatte 23 befestigt sind.

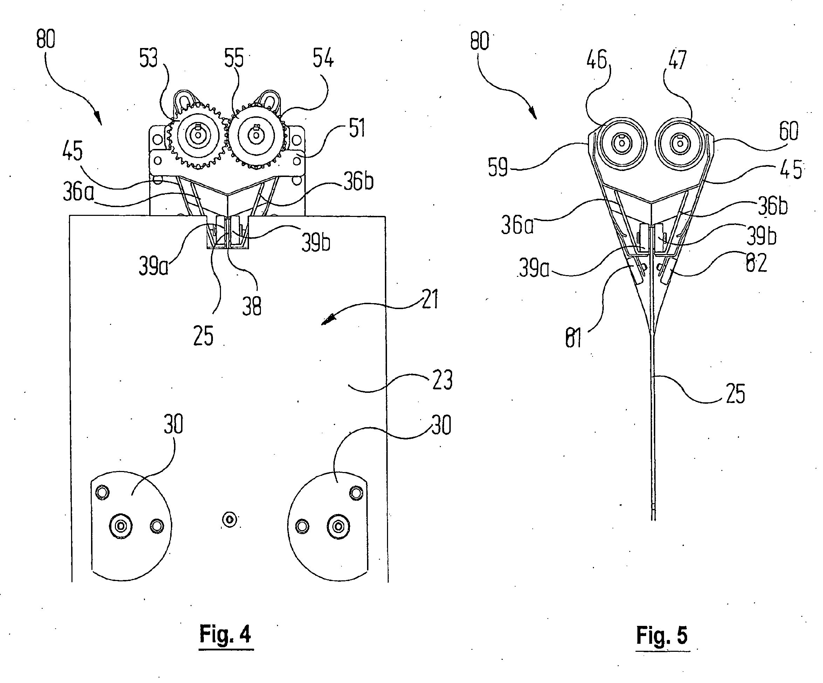

Gehalten wird die Abscheideeinheit 23 innerhalb des Gehäuses 19 von zwei eine Schiene bildenden gewinkelten Profilen 36a, 36b, die insbesondere in den Figuren 4 und 5 erkennbar sind und die in weiter unten erläuterter Weise am Gehäuse 19 befestigt sind. Die Profile 36a, 36b konvergieren von oben nach unten aufeinander zu, biegen sodann in horizontale Bereiche um, deren freie Ränder in knappem Abstand voneinander, parallel zueinander verlaufen, so dass hier zwischen den beiden Profilen 36a, 36b ein schmaler, durchgehender Spalt 38 gebildet wird (vgl. insbesondere Figur 5).

Die Abscheideelektrode 25 durchgreift mit ihrem oberen Endbereich den Spalt 38 zwischen den Halteprofilen 36a, 36b. An den nach oben über den Spalt 38 überstehenden Bereich der Abscheideelektrode 25 ist eine Vielzahl von Rollenpaaren 39a, 39b gelagert, die in den Figuren 4 und 5 senkrecht zur Zeichenebene in Abstand zueinander angeordnet sind. Ersichtlich ist es bei dieser Konstruktion möglich, durch Ziehen an den Handgriffen 35 die Abscheideeinheit 21 aus dem Gehäuse 19 herauszuziehen, wobei die Rollen 39a, 39b in den als Schiene wirkenden Profilen 36a, 36b laufen und sich die Abscheideelekrodee 25 in dem Spalt 38 entsprechend bewegt, bis schließlich die Abscheideelektrode 25 von den Profilen 36a, 36b freikommt. Die so herausgenommen Abscheideeinheit 21 kann dann bei Bedarf gewartet werden. Das Einschieben der Abscheideeinheit 21 erfolgt sinngemäß in umgekehrter Weise.

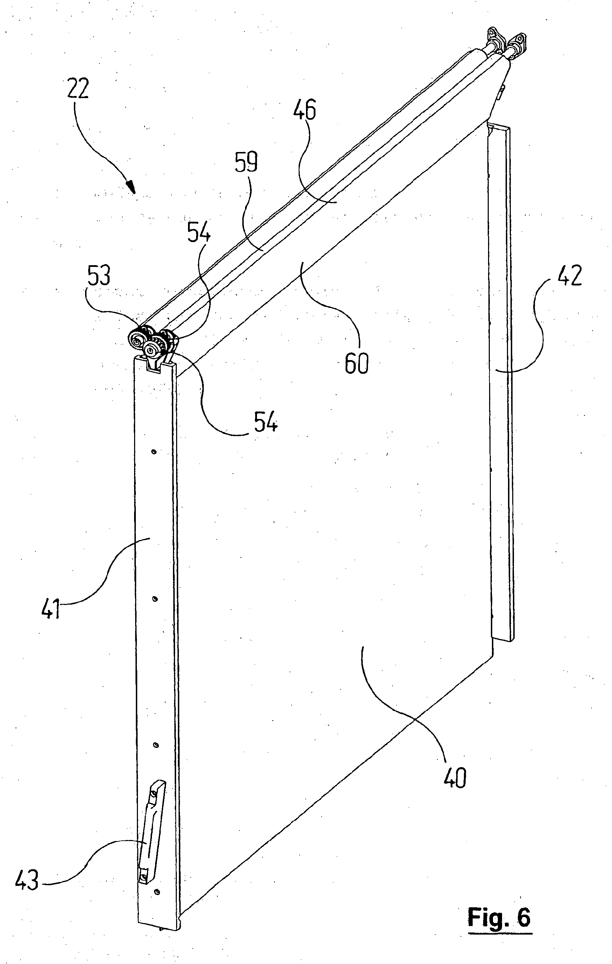

Die schmäleren Abscheideeinheiten 22 wechseln, wie der Figur 1 zu entnehmen ist, mit den breiteren Abscheideeinheiten 21 ab, wobei randständig stets die breiteren Abscheideinheiten 21 in dem Gehäuse 19 vorgesehen sind. Eine dieser schmäleren Abscheideeinheiten 22 ist in Figur 6 dargestellt. Die geringere Breite dieses Abscheideelements 22 erklärt sich daraus, dass die Abscheideeinheit 22 beidseits der Abscheideelektrode 40 keine Gegenelektrodeneinrichtung aufweist. Da die Stirnplatten 41, 42, an denen die seitlichen Ränder der Abscheideelektrode 40 befestigt sind, vergleichsweise schmal sind, ist der an der vorderen Stirnplatte 41 befestigte Griff 43 schräg an dieser Stirnplatte 41 befestigt.

Aufgrund der alternierenden Anordnung der beiden Arten von Abscheideeinheiten 21, 22 innerhalb der Abscheidevorrichtung 14 ist gewährleistet, dass jeweils beiden Abscheideflächen jeder Abscheideelektrode 25 oder 40 eine Gegenelektrodeneinrichtung 26 zugeordnet ist. Mit Ausnahme der äußersten Gegenelektrodeneinrichtungen 26 an den randständigen breiten Abscheideeinheiten 21 arbeiten auf diese Weise alle Gegenelektrodeneinrichtungen 26 mit zwei Abscheideelektroden 25, 40 zusammen, wovon eine einer breiteren Abscheideeinheit 21 und die andere einer schmäleren Abscheideeinheit 22 zugeordnet ist. Die genannten äußersten Gegenelektrodeneinrichtungen 26 arbeiten jeweils zusätzlich mit der Innenfläche der benachbarten Seitenwand des Gehäuses 19 zusammen, die ebenfalls als Abscheidfläche dient und potentialmäßig entsprechend geschaltet ist.

Die Oberseite des Gehäuses 19 der Abscheidevorrichtung 14 wird von einer Anordnung 44 aus Zuführeinrichtungen 80 abgedeckt, mit deren Hilfe den Abscheideelektroden 25 und 40 der Abscheideeinheiten 21, 22 von oben her Abscheideflüssigkeit zugeführt werden kann.

Zur näheren Beschreibung einer dieser Zuführeinrichtungen 80 wird nunmehr erneut auf die Figuren 4 und 5 Bezug genommen.

Wie der Figur 5 zu entnehmen ist, ist eine polygonartig ausgestaltete, nach oben offene Rinne 45 vorgesehen, die an ihrem vorderen und hinteren Ende verschlossen und an dem Gehäuse 19 befestigt ist. Sie trägt die oben schon erwähnten Profile 36a, 36b. Die Rinne 45 steht in ihrem hinteren, also der Rückwand des Gehäuses 19 benachbarten Endbereich mit einem Sammelzuführkanal für Abscheideflüssigkeit in Verbindung, der in der Zeichnung aus Übersichtlichkeitsgründen nicht dargestellt ist.

Zwei parallel verlaufende Walzen 46, 47 sind so angeordnet, dass sie mit ihren unteren Umfangsbereichen in die Rinne 45 hineinreichen. Die Achsen der Walzen 46,47 sind mit ihren hinteren Enden in Lagern 48, 49 gelagert, die in Figur 3 zu erkennen sind und an der Rückwand des Gehäuses 19 der Abscheidevorrichtung 14 angeschraubt sind. Die vorderen Endbereiche der Achsen, welche die Walzen 46, 47 tragen, sind in ähnlicher Weise in Lagern gelagert, die in einem in Figur 4 erkennbaren Halteteil 51 vorgesehen sind.

Das Halteteil 51 wiederum ist an einer Antriebseinrichtung 52 befestigt, die sich oben entlang der gesamten Vorderseite des Gehäuses 19 erstreckt, dabei aber eine geringe Höhe aufweist, so dass der Großteil der Vorderseite des Gehäuses 19 gleichwohl zum Entfernen der Abscheideeinheiten 21, 22 frei bleibt.

Die Achsen der Walzen 46, 47 tragen jeweils in ihren äußeren, über das Halteteil 51 vorstehenden Bereichen ein Zahnrad 53 bzw. 54. Die Zahnräder 53, 54 kämmen miteinander. Die Achse der in Figur 4 rechten Walze 47 trägt in Abstand von dem Zahnrad 54, noch weiter nach außen vorstehend, zusätzlich ein Antriebsritzel 55. In Figur 4 ist das Zahnrad 54 selbst nicht zu erkennen, da es durch das Antriebsritzel 55 verdeckt ist.

Eine Endloskette 56 (vgl. Figur 2) ist entlang der gesamten Antriebseinrichtung 52 geführt und kämmt mit ihrem oberen Trum mit den Antriebsritzeln 55 aller Abscheideeinheiten 21, 22 innerhalb der Abscheidevorrichtung 14. Die Endloskette 56 ist darüber hinaus an beiden gegenüberliegenden Enden der Antriebseinrichtung 52 jeweils über ein Umlenkzahnrad 57 geführt, von denen das eine, welches in Figur 2 am linken Ende der Antriebseinrichtung 52 erkennbar ist, frei läuft, während das andere, welches an dem in Figur 2 rechten Ende der Antriebseinrichtung 52 zu denken ist, von einem Elektromotor 58 angetrieben wird, der in Figur 2 dieses Umlenkzahnrad verdeckt.

Die Zuführeinrichtung 80 für Abscheideflüssigkeit umfasst darüber hinaus für jede Abscheideelektrode 25 und das dieser Abscheideelektrode 25 zugeordnete Paar von Walzen 46, 47 zwei Schälbleche 59, 60. Diese Schälbleche 59, 60 werden lösbar von zwei Magneten 81, 82 gehalten, die mit Hilfe von Blechstreifen, die nicht eigens mit Bezugszeichen versehen sind, an den Profilen 36a, 36b befestigt sind. Die Schälbleche 59, 60 konvergieren mit ihrem größeren unteren Bereich nach unten aufeinander zu und liegen mit ihren unteren Rändern an den gegenüberliegenden Abscheideflächen der Abscheideelektroden 25 an. Der obere Randbereich der Schälbleche 59, 60 ist so nach innen umgebogen, dass der obere Rand gleitend an der Mantelfläche einer der Walzen 46, 47 anliegt. Die Schälbleche 59, 60 bestehen aus Federstahl, so dass sowohl die unteren Ränder an der Abscheideelektrode 25 als auch die oberen Ränder an den Mantelflächen der Walzen 46, 47 mit einer gewissen Vorspannung anliegen.

Eine ähnliche Zuführeinrichtung 80 ist jeweils auch den als Abscheideflächen dienenden Innenseiten der Seitenwände des Gehäuses 19 zugeordnet, die jedoch nur eine Walze und nur ein Schälblech aufweist. Eines dieser Schälbleche ist rechts oben in Figur 2 zu erkennen und dort mit dem Bezugszeichen 64 gekennzeichnet.

Die oben beschriebene Lackieranlage 1 und insbesondere der deren der Luftreinigung dienender Anlagenbereich 6 arbeiten wie folgt:

Der beim Lackieren der Fahrzeugkarosserie in der Lackierkabine 2 entstehende Overspray wird von dem Luftstrom, der die Lackierkabine 2 von oben nach unten durchströmt, aufgenommen und mitgeführt. Der Luftstrom durchtritt den Rost 4 und gelangt auf diese Weise in den Abscheideraum 9. Er trifft dort auf die Leitbleche 10, 11 bzw. auf die über diese 11a gleichmäßig strömende Abscheideflüssigkeit. Bereits an dieser Stelle wird von der Abscheideflüssigkeit ein großer Teil der Overspray-Partikel aufgenommen. Die Abscheideflüssigkeit strömt entlang der Leitbleche 11, 10 nach unten und sammelt sich in einem Sumpf 61 im unteren Bereich des Übergangsraums 12.

Auch die Luft, die nach wie vor mit Overspray-Partikeln beladen ist, wird trichterartig in den Übergangsraum 12 geführt, dort zunächst um 90° umgeleitet und sodann aus dem Übergangsraum 12 durch eine erneute 90°-Umlenkung von unten her in die untere Einlassöffnung 15 des Gehäuses 19 der Abscheidevorrichtung 14 eingeführt. Der Abscheideraum 9 und der Übergangsraum 12 bilden so einen Luftweg zwischen der Auslassöffnung 3 der Lackierkabine 2 und der Einlassöffnung 15 der Abscheidevorrichtung 14.

Die Abscheidevorrichtung 14 wurde zuvor betriebsbereit gemacht. Dies bedeutet zum einen, dass an die Gegenelektrodeneinrichtungen 26 die erforderliche Hochspannung angelegt wird. Zum anderen werden die Rinnen 45 der verschiedenen Zuführeinrichtungen 80 so weit mit Abscheideflüssigkeit gefüllt, dass die unteren Mantelbereiche der jeweiligen Walzen 46, 47 in die Abscheideflüssigkeit eintauchen. Dabei wird Sorge dafür getragen, dass dieses Niveau der Abscheideflüssigkeit in den Rinnen 45 dauerhaft aufrechterhalten bleibt.

Durch Ingangsetzen des Elektromotors 58 werden die Zuführeinrichtungen 80 in Betrieb genommen. Die Endloskette 56 treibt die verschiedenen Ritzel 55 der Zuführeinrichtungen 80 an, wodurch zunächst das auf der selben Achse sitzende Zahnrad 54 und über dieses dann das kämmende Zahnrad 53 der anderen Walze 46 in Drehung versetzt wird. Die beiden Walzen 46, 47, die einer Abscheideeinheit 21 bzw. 22 zugehören, drehen sich auf diese Weise gegensinnig. Die Oberflächen der Walzen 46, 47 nehmen dabei Abscheideflüssigkeit mit, bis diese durch die oberen Ränder der Schälbleche 59, 60 von den Walzenoberflächen abgeschält wird.

Jetzt fließt eine zusammenhängende Schicht der Abscheideflüssigkeit über die Außenflächen der Schälbleche 59 nach unten und gelangt auf diese Weise auf die gegenüberliegenden Abscheideflächen der Abscheideelektroden 25 bzw. 40. Die Abscheideflüssigkeit fließt nunmehr als gleichmäßige Schicht auf den Abscheideelektroden 25 bzw. 40 nach unten und tropft dann von deren unteren Rändern in den Sumpf 61 des Übergangsraums 12 ab.

Die Abscheideflüssigkeit wird kontinuierlich oder intermittierend aus dem Sumpf 61 abgezogen und durch ein geeignetes Verfahren, beispielsweise durch Filtration, von den Overspray-Partikeln befreit. Sie kann dann zur Wiederverwendung in die Lackieranlage 1 zurückgeleitet werden.

Die mit Overspray-Partikeln beladene Luft tritt, wie oben schon erwähnt, in das Gehäuse 19 der Abscheidevorrichtung 14 ein. Sie und insbesondere die von ihr mitgeführten Overspray-Partikel werden im Bereich der Koronadrähte 27 der verschiedenen Gegenelektrodeneinrichtungen 26 ionisiert und im Bereich der Feldelektroden 29 der Gegenelektrodeneinrichtungen 26 in Richtung auf die auf Massepotenzial liegende zugeordnete Abscheideelektrode 25 bzw. 40 gezogen. Die Overspray-Partikel werden dabei von der Abscheideflüssigkeit, die von oben über die Abscheidefläche strömt, aufgenommen.

Luft und Abscheideflüssigkeit fließen auf diese Weise im Gegenstrom. Dies hat zur Folge, dass im unteren Bereich der Abscheideelektroden 25, 40, wo die Verschmutzung der Luft mit Overspray-Partikeln am größten ist, auch die am stärksten mit abgeschiedenen Overspray-Partikeln beladene Abscheideflüssigkeit strömt. Umso weiter die Luft sich nach oben bewegt, umso reiner wird sie. Entsprechend wird auch die über die Abscheideelektroden 25, 40 fließende Abscheideflüssigkeit sauberer, so dass die Luft, welche die Abscheidevorrichtung 14 nach oben verlässt, ein Höchstmaß an Sauberkeit erreicht hat. Sie kann dann ohne Weiteres über den Luftkanal 17 und den Sammel-Abführkanal 18 der Rekonditionierung und von dort erneut der Lackierkabine 2 zugeführt werden.

Anders als bei dem beschriebenen und in der Zeichnung dargestellten Ausführungsbeispiel können die Abscheideelektroden mit ihren unteren Rändern auch in den Sumpf der Abscheideflüssigkeit eintauchen, sodass die mit Overspray-Partikeln beladenen Abscheideflüssigkeit von den unteren Rändern nicht abtropft sondern direkt in den Sumpf fliesst.

## Patentansprüche

1. Anlage (1) zum Beschichten von Gegenständen mit
a) einer Beschichtungskabine (2), in welcher die Gegenstände mit Beschichtungsmaterial beaufschlagbar sind und durch die ein Luftstrom geleitet werden kann, der Overspray-Partikel des Beschichtungsmaterials aufnimmt und abführt;
b) einer elektrostatisch auf trockenem Wege arbeitenden Abscheidevorrichtung (14), deren Gehäuse (19) eine Einlassöffnung (15) für mit Overspray-Partikeln beladene Luft und eine Auslassöffnung (16) für die gereinigte Luft aufweist, wobei im Gehäuse (19) mindestens eine eine Abscheidefläche aufweisende Abscheideelektrode (25, 40) und mindestens eine Gegenelektrodeneinrichtung (26) angeordnet sind;
c) einer Hochspannungsquelle (63), deren Pole mit der Abscheideelektrode (25, 40) bzw. der Gegenelektrodeneinrichtung (26) verbindbar sind;
d) einem vom Boden der Beschichtungskabine (2) zur Einlassöffnung (15) der Abscheidevorrichtung (14) führenden Luftweg (9, 12) für die mit Overspray-Partikeln beladene Luft;
**dadurch gekennzeichnet, dass**
e) der Luftweg (9, 12) vom Boden der Beschichtungskabine (2) zunächst zu mindestens zwei Leitblechen (10, 11) führt und dort von diesen begrenzt ist, die sich in Strömungsrichtung der Luft trichterartig verjüngen,
wobei
die Leitbleche (10, 11) von einer mehr oder weniger zusammenhängenden Schicht einer Abscheideflüssigkeit gleichmäßig überströmbar sind, in welcher ein Großteil der Overspray-Partikel aufgenommen und abgeführt wird;
f) der Luftweg (9, 12) von den Leitblechen (10, 11) weiter zur Einlassöffnung (15) der elektrostatischen Abscheidevorrichtung (14) führt;
g) die Einlassöffnung (15) an der Unterseite und die Auslassöffnung (16) an der Oberseite der Abscheidevorrichtung (14) angeordnet ist, derart, dass die Luft die Abscheidevorrichtung (14) von unten nach oben durchströmt;
h) die mindestens eine Gegenelektrodeneinrichtung (26) derart ausgebildet ist, dass die in die Abscheidevorrichtung (14) eintretende Luft und die von ihr mitgeführten Overspray-Partikel ionisiert werden; wobei
i) die mindestens eine Gegenelektrodeneinrichtung (26) einen hauptsächlich der Ionisation dienenden Koronabereich (26a) und einen hauptsächlich der Abscheidung dienenden Feldbereich (26b) aufweist, wobei der Koronabereich (26a) unterhalb des Feldbereichs (26b) angeordnet ist.

2. Anlage (1) nach Anspruch 1, **dadurch gekennzeichnet, dass** mehrere Abscheideelektroden (25, 40) und zugeordnete Gegenelektrodeneinrichtungen (26) nebeneinander in der Abscheidevorrichtung (14) angeordnet sind, wobei mindestens ein Teil der Abscheideelektroden (25) jeweils mit mindestens einer Gegenelektrodeneinrichtung (26) zu einer Abscheideeinheit (21) zusammengefasst ist, die insgesamt der Abscheidevorrichtung (14) entnommen werden kann.

3. Anlage (1) nach Anspruch 2, **dadurch gekennzeichnet,**
**dass** zumindest eine Abscheideelektrode (40) ohne zugehörige Gegenelektrodeneinrichtung (26) als Abscheideeinheit (22) ausgebildet ist, die insgesamt der Abscheidevorrichtung (14) entnommen werden kann.

4. Anlage (1) nach Anspruch 2 oder 3, **dadurch gekennzeichnet,**
**dass** die Abscheideeinheiten (21, 22) auf Schienen im Gehäuse (19) der Abscheidevorrichtung (14) verfahrbar sind.

5. Anlage (1) nach einem der vorhergehenden Ansprüche,
**dadurch gekennzeichnet, dass** jeder Abscheidelektrode (25, 40) eine Zuführeinrichtung (80) zugeordnet ist, mit deren Hilfe dem oberen Bereich jeder Abscheidefläche der Abscheideelektrode (25, 40) Abscheideflüssigkeit zuführbar ist, derart, dass die Abscheideflüssigkeit auf jeder Abscheidefläche der Abscheideelektrode (25, 40) flächig herabfließt.

6. Anlage (1) nach Anspruch 5, **dadurch gekennzeichnet, dass**
a) die Zuführeinrichtung (80) eine Rinne (45) aufweist, die oberhalb der Abscheideelektrode (25, 40) angeordnet und bis zu einem bestimmten Spiegel mit Abscheideflüssigkeit befüllbar ist;
b) mindestens eine angetriebene Walze (46, 47) vorgesehen ist, die mit einem Bereich ihrer Mantelfläche in die Abscheideflüssigkeit eintaucht und bei ihrer Verdrehung Abscheideflüssigkeit mitnimmt;
c) eine Leiteinrichtung (59, 60) vorgesehen ist, welche die Abscheideflüssigkeit von der Mantelfläche der Walze (46, 47) zu der oder den Abscheideflächen der Abscheideelektrode (25, 40) führt.

7. Anlage (1) nach Anspruch 6, **dadurch gekennzeichnet,**
**dass** die Leiteinrichtung mindestens ein Schälblech (59, 60) umfasst, das mit einem oberen Rand federnd gegen die Mantelfläche der Walze (46, 47) und mit einem unteren Rand federnd gegen die Abscheidefläche der Abscheideelektrode (25, 40) anliegt.

8. Anlage (1) nach Anspruch 6 oder 7, **dadurch gekennzeichnet,**
**dass** alle Walzen (46, 47) aller Zuführeinrichtungen (80) durch eine gemeinsame Antriebseinrichtung (58) antreibbar sind.

9. Anlage (1) nach einem der vorhergehenden Ansprüche, **dadurch gekennzeichnet, dass** sie zum Lackieren von Gegenständen ausgebildet ist.

10. Anlage (1) nach einem der vorhergehenden Ansprüche, **dadurch gekennzeichnet, dass** die Gegenstände Fahrzeugkarosserien sind.

## Claims

1. A system (1) for coating objects having:
a) a coating booth (2) in which the objects may be acted upon by coating material and through which an air stream can be guided which takes up overspray particles of the coating material and conveys them away;
b) an electrostatically operating separating device (14) working in a dry way whereof a housing (19) has an inlet opening (15) for overspray-particle-laden air and an outlet opening (16) for the cleaned air, wherein at least one separating electrode (25, 40), which has a separating surface, and at least one counter electrode device (26) are arranged in the housing (19);
c) a high voltage source (63), whereof the poles can be connected to the separating electrode (25, 40) and the counter electrode device (26) respectively;
d) an air path (9, 12) for the overspray-particle-laden air, which leads from the base of the coating booth (2) to the inlet opening (15) of the separating device (14);
**characterized in that**
e) the air path (9, 12) leads from the base of the coating booth (2) first to at least two baffles (10, 11) and is there delimited by these, which taper in the manner of a funnel in the direction of flow of the air;
wherein
the baffles (10, 11) can be uniformly overflown by a more or less continuous film of a separating fluid in which a major part of the overspray particles is taken up and conveyed away;
f) the air path (9, 12) leads from the baffles (10, 11) further to the inlet opening (15) of the electrostatic separating device (14);
g) the inlet opening (15) is arranged on the underside and the outlet opening (16) on the upper side of the separating device (14), such that the air flows through the separating device (14) from bottom to top;
h) the at least one counter electrode device (26) is designed such that the air streaming into the separating device (14) and the overspray particles taken away by it are ionized; wherein
i) the at least one counter electrode device (26) comprises a corona region (26a) which serves primarily for the ionisation and a field region (26b) which serves primarily for the separation, wherein the corona region (26a) is arranged below the field region (26b).

2. A system (1) according to claim 1, **characterized in that** a plurality of separating electrodes (25, 40) and associated counter electrode devices (26) are arranged next to one another in the separating device (14), with at least a part of the separating electrodes (25) being respectively grouped with at least one counter electrode device (26) to form a separating unit (21) which can be removed as a whole from the separating device (14).

3. A system (1) according to claim 2, **characterized in that** at least one separating electrode (40) with no associated counter electrode device (26) is designed as a separating unit (22) which can be removed as a whole from the separating device (14).

4. A system (1) according to claim 2 or 3, **characterized in that** separating unit (21, 22) is movable on rails in the housing (19) of the separating device (14).

5. A system (1) according to one of the preceding claims, **characterized in that** each separating electrode (25, 40) is associated with a supply device (80), with the aid of which separating fluid can be supplied to the upper region of each separating surface of the separating electrode (25, 40) in such a way that the separating fluid flows extensively over each separating surface of the separating electrode (25, 40).

6. A system (1) according to claim 5, **characterized in that**
a) the supply device (80) has a channel (45) which is arranged above the separating electrode (25, 40) and can be filled to a certain level with separating fluid;
b) at least one driven roller (46, 47) is provided which dips with one region of its outer surface into the separating fluid and takes up separating fluid as it rotates;
c) a guide means (59, 60) is provided which guides the separating fluid from the outer surface of the roller (46, 47) to the separating surface or surfaces of the separating electrode (25, 40).

7. A system (1) according to claim 6, **characterized in that** the guide means comprises at least one stripping plate (59, 60), which lies with an upper edge resiliently against the outer surface of the roller (46, 47) and with a lower edge resiliently against the separating surface of the separating electrode (25, 40).

8. A system (1) according to claim 6 or 7, **characterized in that** all rollers (46, 47) of all supply devices (80) can be driven by one common drive means (58).

9. A system (1) according to one of the preceding claims, **characterized in that** it is designed for painting objects.

10. A system (1) according to one of the preceding claims, **characterized in that** the objects are vehicle bodies.

## Revendications

1. Installation (1) de revêtement d'objets, comprenant
a) une cabine de revêtement (2), dans laquelle les objets peuvent être exposés à un matériau de revêtement et à travers laquelle peut être dirigé un courant d'air qui absorbe et évacue les particules d'excédent de pulvérisation du matériau de revêtement ;
b) un dispositif de séparation (14) fonctionnant électrostatiquement par voie sèche, dont le boîtier (19) comporte une ouverture d'entrée (15) pour l'air chargé de particules d'excédent de pulvérisation et une ouverture de sortie (16) pour l'air purifié, au moins une électrode de séparation (25, 40) comportant une surface de séparation et au moins un dispositif de contre-électrode (26) étant disposés dans le boîtier (19) ;
c) une source de haute tension (63) dont les pôles peuvent être reliés à l'électrode de séparation (25, 40) ou au dispositif de contre-électrode (26) ;
d) un passage d'air (9, 12) conduisant du plancher de la cabine de revêtement (2) à l'ouverture d'entrée (15) du dispositif de séparation (14) pour l'air chargé de particules d'excédent de pulvérisation ;
**caractérisée en ce que**
e) le passage d'air (9, 12) conduit du plancher de la cabine de revêtement (2) d'abord à au moins deux tôles de guidage (10, 11) où il est limité par celles-ci qui se rétrécissent en forme d'entonnoir dans la direction d'écoulement de l'air,
les tôles de guidage (10, 11) pouvant être parcourues uniformément par une couche plus ou moins continue d'un liquide de séparation dans lequel une grande partie des particules d'excédent de pulvérisation est absorbée et évacuée ;
f) le passage d'air (9, 12) conduit ensuite des tôles de guidage (10, 11) à l'ouverture d'entrée (15) du dispositif de séparation électrostatique (14) ;
g) l'ouverture d'entrée (15) est disposée sur le dessous et l'ouverture de sortie (16) sur le dessus du dispositif de séparation (14), de sorte que l'air traverse le dispositif de séparation (14) de bas en haut ;
h) ledit au moins un dispositif de contre-électrode (26) est conçu de façon que l'air entrant dans le dispositif de séparation (14) et les particules d'excédent de pulvérisation entraînées par lui soient ionisées ;
i) ledit au moins un dispositif de contre-électrode (26) comportant une zone de couronne (26a) servant principalement à l'ionisation et une zone de champ (26b) servant principalement à la séparation, la zone de couronne (26a) étant disposée sous la zone de champ (26b).

2. Installation (1) selon la revendication 1, **caractérisée en ce que** plusieurs électrodes de séparation (25, 40) et dispositifs de contre-électrode (26) associés sont disposés les uns à côté des autres dans le dispositif de séparation (14), au moins une partie des électrodes de séparation (25) étant regroupée chaque fois avec au moins un dispositif de contre-électrode (26) en une unité de séparation (21) qui peut être extraite en bloc du dispositif de séparation (14).

3. Installation (1) selon la revendication 2, **caractérisée en ce qu'**au moins une électrode de séparation (40) sans dispositif de contre-électrode (26) associé est réalisée sous la forme d'une unité de séparation (22) qui peut être extraite en bloc du dispositif de séparation (14).

4. Installation (1) selon la revendication 2 ou 3, **caractérisée en ce que** les unités de séparation (21, 22) sont déplaçables sur des rails dans le boîtier (19) du dispositif de séparation (14).

5. Installation (1) selon l'une des revendications précédentes, **caractérisée en ce qu'**à chaque électrode de séparation (25, 40) est associé un dispositif d'amenée (80) à l'aide duquel du liquide de séparation peut être amenée dans la zone supérieure de chaque surface de séparation de l'électrode de séparation (25, 40), de sorte que le liquide de séparation s'écoule en nappe sur chaque surface de séparation de l'électrode de séparation (25, 40).

6. Installation (1) selon la revendication 5, **caractérisée en ce que**
a) le dispositif d'amenée (80) comporte une rigole (45) qui est disposée au-dessus de l'électrode de séparation (25, 40) et peut être remplie de liquide de séparation jusqu'à un certain niveau ;
b) au moins un rouleau entraîné (46, 47) est prévu, qui trempe dans le liquide de séparation par une partie de sa surface extérieure et entraîne du liquide de séparation lors de sa rotation ;
c) un dispositif de guidage (59, 60) est prévu, lequel guide le liquide de séparation de la surface extérieure du rouleau (46, 47) vers la ou les surfaces de séparation de l'électrode de séparation (25, 40).

7. Installation (1) selon la revendication 6, **caractérisée en ce que** le dispositif de guidage comprend au moins une tôle de décollement (59, 60) qui s'appuie élastiquement contre la surface extérieure du rouleau (46, 47) par un bord supérieur et élastiquement contre la surface de séparation de l'électrode de séparation (25, 40) par un bord inférieur.

8. Installation (1) selon la revendication 6 ou 7, **caractérisée en ce que** tous les rouleaux (46, 47) de tous les dispositifs d'amenée (80) peuvent être entraînés par un dispositif d'entraînement commun (58).

9. Installation (1) selon l'une des revendications précédentes, **caractérisée en ce qu'**elle est conçue pour la peinture d'objets.

10. Installation (1) selon l'une des revendications précédentes, **caractérisée en ce que** les objets sont des carrosseries de véhicule.
